# EUROPÄISCHE PATENTSCHRIFT

(11) **EP 2 580 855 B1**
(45) Veröffentlichungstag und Bekanntmachung des Hinweises auf die Patenterteilung: **11.12.2019**
(21) Anmeldenummer: 11749796.6
(22) Anmeldetag: 19.08.2011
(51) Int. Cl.: H02M 1/32, G01K 3/04, F03D 1/00

(54) **VERFAHREN UND SYSTEM ZUR BELASTUNGSANPASSUNG EINES ELEKTRISCHEN UND/ODER ELEKTRONISCHEN BAUTEILS IN EINER WINDKRAFTANLAGE**
METHOD AND SYSTEM FOR ADAPTING THE LOAD ON AN ELECTRICAL AND/OR ELECTRONIC COMPONENT IN A WIND TURBINE
PROCÉDÉ ET SYSTÈME D'ADAPTATION DES CHARGES SUBIES PAR UN COMPOSANT ÉLECTRIQUE ET/OU ÉLECTRONIQUE DANS UNE ÉOLIENNE

(30) Priorität: 20.08.2010 EP 10173530
(43) Veröffentlichungstag der Anmeldung: 17.04.2013
(73) Patentinhaber: Siemens Gamesa Renewable Energy A/S, 7330 Brande (DK)
(72) Erfinder: KRUG, Florian, 81249 München (DE)
(74) Vertreter: Aspacher, Karl-Georg
(86) Internationale Anmeldenummer: PCT/EP2011/064270
(87) Internationale Veröffentlichungsnummer: WO 2012/022797

(56) Entgegenhaltungen:
- EP-A2- 2 031 948
- WO-A1-2008/145275
- WO-A2-2009/133161
- DE-A1-102005 033 229
- GB-A- 2 361 064
- US-A1- 2009 231 147

## Beschreibung

Die vorliegende Erfindung betrifft ein Verfahren zur Belastungsanpassung eines elektrischen und/oder elektronischen Bauteils, insbesondere eines Umrichters, in einer Windkraftanlage. Außerdem betrifft sie ein System zur Belastungsanpassung eines elektrischen und/oder elektronischen Bauteils, insbesondere eines Umrichters, in einer Windkraftanlage.

Aus der Druckschrift DE 10 2005 033229 A1 sind ein Netzwerk, ein Verfahren und eine Recheneinheit zur Steuerung von Windkraftanlagen bekannt, die eine Erhebung und Verarbeitung von Sensordaten umfassen, beispielsweise zur Windgeschwindigkeit und zur Stärke von Vibrationen. Auf Basis des Abgleichs von aktuellen Sensordaten, die an einer relativ zur jeweiligen Windrichtung an vorderer Stelle positionierten Windkraftanlage gewonnen werden, mit definierten Konstruktionsgrenzwerten, wird an mindestens einer dahinter angeordneten Windkraftanlage reaktionsschnell eine Verstellung der Neigung der Rotorblätter vorgenommen, um eine Überschreitung von Konstruktionsgrenzwerten und damit Schäden durch Windüberlasten zu vermeiden und damit langfristig den Stromleistungsertrag eines Windparks zu steigern.

In der Druckschrift WO 2009/ 133 161 A2 wird die Überwachung eines Erhaltungszustands eines Getriebes einer Windkraftanlage beschrieben. Es werden Kräfte und Drehmomente, die auf das Getriebe einwirken, in regelmäßigen Zeitabständen gemessen und modellhaft wird der Zeitpunkt eines Defekts des Getriebes ermittelt. Abhängig von diesem Zeitpunkt werden die zukünftigen Betriebsbedingungen des Getriebes begrenzt, um eine gewünschte Lebensdauer zu erreichen.

Elektrische und/oder elektronische Bauteile in Windkraftanlagen, beispielsweise Umrichter (auch Inverter genannt), sind aufgrund ihres besonderen Einsatzortes, der meist innerhalb des Maschinenhauses (auch Kanzel genannt) der Windkraftanlage angeordnet ist, äußerst rauen Umweltbedingungen ausgesetzt. Insbesondere unterliegen sie starken Vibrationen durch Wind und Betrieb der Rotoren, sowie hohen Temperaturschwankungen aufgrund irregulärer Schaltzyklen und aufgrund der schnell wechselnden Außentemperaturen, wobei diese Wechsel zudem hohe Amplituden aufweisen. Dies gilt sowohl für den Betrieb in Offshore-Windkraftanlagen als auch in Onshore-Windkraftanlagen, wobei beim Offshore-Betrieb zusätzlich noch Einflussfaktoren wie vermehrt auftretende Stürme und damit verbunden (salzhaltiges) Spritzwasser die Umweltbedingungen zusätzlich verschärfen. Dies bedeutet in Summe, dass derartige elektrische und/oder elektronische Bauteile einer starken Abnutzung unterliegen, selbst obwohl sie meist im Gehäuse des Maschinenhauses angeordnet sind.

Gleichzeitig bedeutet ein unerwarteter Ausfall eines einzelnen solchen elektrischen und/oder elektronischen Bauteils in einer Windkraftanlage sehr hohen Aufwand an zusätzlichem Wartungseinsatz und -kosten. Es ist daher meist das Ziel, solche Bauteile, beispielsweise im Rahmen von regelmäßigen Wartungen, in einer regulären Austauschaktion zu warten, damit ein Ausfall nicht plötzlich und unerwartet auftritt wodurch zusätzliche Stillstandzeiten vermieden werden können.

Entsprechend wichtig ist es, hoch verlässliche Möglichkeiten der richtigen Abschätzung eines Wartungszeitpunkts bereitzustellen, um früh genug reagieren zu können, das heißt bevor das elektrische und/oder elektronische Bauteil ausfällt. Meist besteht heute die Überwachung der Bauteile in einer reinen Fehlerüberwachung, d. h. es wird angezeigt, wenn ein Bauteil bereits ausgefallen ist. Um solchen Ausfällen zu begegnen werden zudem die Wartungsintervalle bewusst sehr kurz gehalten sind und lieber ein Bauteil sicherheitshalber zu früh ausgetauscht. Dies wiederum bringt mit sich, dass der Material- und Arbeitseinsatz bezüglich dieser elektrischen und/oder elektronischen Bauteile in der Regel höher ist als es eigentlich technisch notwendig wäre.

Auch wenn ein solcher Wartungszeitpunkt akkurat bestimmt ist, besteht noch immer das Problem, dass dieser Wartungszeitpunkt bereits vor einem Wartungszeitpunkt in einem planmäßigen Wartungsintervall liegen kann, d.h. dass zu erwarten ist, dass das Bauteil bereits vor dem nächsten Eintreffen von Wartungspersonal an der Windkraftanlage ausfällt. Dies bedeutet, dass Personal vorzeitig, d.h. außerhalb des Wartungsturnus, zur Windkraftanlage geschickt werden muss, um eine außerplanmäßige Wartung vorzunehmen, die mit entsprechenden Mehraufwänden verbunden ist.

Aufgabe der Erfindung ist es daher, den Betrieb von elektrischen und/oder elektronischen Bauteilen in Windkraftanlagen zu optimieren, insbesondere möglichst zu gewährleisten, dass die Bauteile nicht vorzeitig, d.h. vor einem routinemäßigen Wartungszeitpunkt, ausfallen.

Diese Aufgabe wird durch ein Verfahren gemäß Anspruch 1 und ein System gemäß Anspruch 14 gelöst.

Entsprechend umfasst ein Verfahren der eingangs genannten Art erfindungsgemäß mindestens folgende Schritte:
- Ermittlung einer erwarteten Lebenszeit des elektrischen und/oder elektronischen Bauteils bis zu einem Erreichen eines Wartungsindikatorwerts, der einen Zustand des Bauteils repräsentiert, an dem das Bauteil aufgrund von vorab festgelegten Vorgaben gewartet werden soll,
- Abgleich der erwarteten Lebenszeit mit einem nächsten Wartungszeitpunkt der Windkraftanlage,
- Steuerung der Windkraftanlage und mindestens einer weiteren Windkraftanlage im räumlichen Umfeld der Windkraftanlage derart, dass die Belastung des elektrischen und/oder elektronischen Bauteils reduziert wird. Die Steuerung der Windkraftanlage erfolgt dabei in Abhängigkeit von den Ergebnissen des Abgleichs der erwarteten Lebenszeit mit dem nächsten Wartungszeitpunkt der Windkraftanlage, wobei die weitere Windkraftanlage gezielt so betrieben wird, dass die Windkraftanlage stärker als notwendig in einen Windschatten der weiteren Windkraftanlage gelangt.

Es erfolgt also eine absichtliche, zielgerichtete Verschattung der betreffenden Windkraftanlage durch die Ausrichtung der weiteren Windkraftanlage(n) mit dem Effekt der Windreduzierung am Rotor der betreffenden Windkraftanlagen und dadurch wieder indirekt einer Belastungsreduzierung des jeweiligen Bauteils.

Durch das erfindungsgemäße Verfahren wird erreicht, dass die Lebenszeit des betreffenden Bauteils dahingehend optimiert wird, dass es möglichst bis zum nächsten Wartungszeitpunkt noch funktioniert. Der Hintergrund dessen ist, dass es weniger Aufwand und Kosten bedeutet, die Windkraftanlage in ihrer Leistung und dadurch die Stromausbeute zu reduzieren als den Totalausfall der Windkraftanlage bis zu diesem Wartungszeitpunkt zu riskieren oder vorzeitig Servicepersonal vor Ort zu schicken. Dies gilt für Onshore-Anlagen, besonders jedoch für Offshore-Anlagen, die nur deutlich schwieriger und aufwändiger zu erreichen sind als die erstgenannten.

Es wird also zunächst die zu erwartende (d.h. erwartete) Lebenszeit ermittelt und hieraus eine Anzahl von Steuerbefehlen abgeleitet, die direkt, bevorzugt jedoch indirekt die Belastung des betreffenden Bauteils reduzieren helfen. Eine direkte Reduzierung von Belastungen kann beispielsweise durch schlichtes Abschalten des betreffenden Bauteils erreicht werden. Beispiele für die indirekte Reduzierung der Belastungen sind abhängig von der Art des Bauteils - speziell für einen Umrichter werden weiter unten mehrere Ausführungsbeispiele erläutert.

Als Richtgröße im Verfahren dient der sogenannte Wartungsindikatorwert. Dieser Wartungsindikatorwert repräsentiert einen Zustand des Bauteils, an dem das Bauteil aufgrund von vorab festgelegten Vorgaben gewartet werden soll. Solche vorab festgelegten Vorgaben umfassen beispielsweise Erfahrungswerte, Normen oder anderweitige ähnliche Vorschriften. Unter einer Wartung wird sowohl ein Austausch des kompletten Bauteils oder von Komponenten des Bauteils, jedoch auch eine Reparatur beziehungsweise eine eingehende Untersuchung des Bauteils verstanden. Gleicht man diesen Wartungsindikatorwert mit dem Ist-Zustand des Bauteils ab, ergibt sich daraus die erwartete Lebenszeit des Bauteils, die im Folgenden zur Steuerung der Windkraftanlage bzw. umgebender Windkraftanlagen im erfindungsgemäßen Sinne genutzt wird. Dadurch wird eine vom Zustand des Bauteils abhängige Steuerung erreicht, das Bauteil also gezielt geschont und so letztendlich eine Lebenszeitverlängerung des Bauteils bewirkt.

Als Windkraftanlagen im räumlichen Umfeld der betreffenden Windkraftanlage werden all jene Anlagen bezeichnet, die in einem räumlich engen Funktionszusammenhang mit der betreffenden Windkraftanlage stehen, deren Bauteil geschont werden soll. Es handelt sich also insbesondere um andere Windkraftanlagen innerhalb eines Windparks, bevorzugt gerade um solche, die in direkt angrenzender Nachbarschaft zur betreffenden Windkraftanlage stehen, die diese also beispielsweise teilweise in einen Windschatten stellen können.

Ein erfindungsgemäßes System der eingangs genannten Art umfasst mindestens:
- eine Ermittlungseinheit, die im Betrieb eine erwartete Lebenszeit des elektrischen und/oder elektronischen Bauteils bis zu einem Erreichen eines Wartungsindikatorwerts ermittelt, der einen Zustand des Bauteils repräsentiert, an dem das Bauteil aufgrund von vorab festgelegten Vorgaben gewartet werden soll,
- eine Abgleicheinheit, die so ausgebildet ist, dass sie die erwartete Lebenszeit mit einem nächsten Wartungszeitpunkt der Windkraftanlage abgleicht,
- eine Steuerungseinheit, die die Windkraftanlage und mindestens eine weitere Windkraftanlage im räumlichen Umfeld der Windkraftanlage in Abhängigkeit von den Ergebnissen des Abgleichs der erwarteten Lebenszeit mit dem nächsten Wartungszeitpunkt der Windkraftanlage derart steuert, dass die Belastung des elektrischen und/oder elektronischen Bauteils reduziert wird, wobei die weitere Windkraftanlage gezielt so betrieben wird, dass die Windkraftanlage stärker als notwendig in einen Windschatten der weiteren Windkraftanlage gelangt.

Da das Verfahren innerhalb des Systems, also des Belastungsanpassungssystems, sowohl durch Hardware als auch mit Hilfe von Softwarekomponenten bzw. durch eine Kombination aus Hardware und Software durchgeführt werden kann, umfasst die Erfindung auch ein Computerprogrammprodukt, das direkt in einen Prozessor eines programmierbaren Belastungsanpassungssystems ladbar ist, mit Programmcode-Mitteln, um alle Schritte eines erfindungsgemäßen Verfahrens auszuführen, wenn das Programmprodukt auf dem Belastungsanpassungssystem ausgeführt wird.

Weitere besonders vorteilhafte Ausgestaltungen und Weiterbildungen der Erfindung ergeben sich auch aus den abhängigen Ansprüchen sowie der nachfolgenden Beschreibung. Dabei kann das erfindungsgemäße Verfahren auch entsprechend den abhängigen Ansprüchen zum Ermittlungssystem weitergebildet sein und umgekehrt.

Was die Ermittlung der erwarteten Lebenszeit betrifft, so umfasst diese bevorzugt mindestens folgende Schritte:
a) Ermittlung eines aktuellen Beanspruchungsindikatorwerts des elektrischen und/oder elektronischen Bauteils,
b) Inbezugsetzen des aktuellen Beanspruchungsindikatorwerts mit dem Wartungsindikatorwert,
c) Ableitung der erwarteten Lebenszeit auf Basis des Bezugs zwischen dem Beanspruchungsindikatorwert und dem Wartungsindikatorwert.

Zusätzlich zur Bereitstellung des Wartungsindikatorwerts wird also der Beanspruchungsindikatorwert als Orientierungsgröße ermittelt. Er repräsentiert den derzeitigen Zustand des Bauteils. Während bei der Bestimmung von Beanspruchungsindikatorwerten bisher meist eine Benutzungszeit eines elektronischen Bauelements schlicht aufaddiert wurde, ist es präferiert, feingenauere Mess- bzw. Ermittlungsmethoden heranzuziehen, die einen genaueren Beanspruchungsindikatorwert, nämlich einen zustandsabhängigeren Wert liefern. Bevorzugte Methoden der Ermittlung werden im Folgenden noch erläutert.

Die beiden Werte werden also in Bezug gesetzt und hieraus die erwartete Lebenszeit abgeleitet.

Um ein möglichst optimales Ergebnis der Belastungsanpassung zu erzielen, ist es ganz besonders bevorzugt, dass die Ermittlung der erwarteten Lebenszeit und die Steuerung so lange in einem geschlossenen Regelkreislauf wiederholt werden, bis die Belastung des elektrischen und/oder elektronischen Bauteils so reduziert ist, dass sich die erwartete Lebenszeit mindestens bis zum nächsten Wartungszeitpunkt verlängert. Es wird also eine "closed loop"-Steuerung realisiert, die als Ergebnis hat, dass die Lebenszeit des Bauteils nicht nur ein wenig verlängert wird, sondern zielgerichtet so weit verlängert, dass es die Zeit bis zum nächsten Wartungszeitpunkt auch überdauert und im regulären Wartungsbetrieb gewartet werden kann. Durch den geschlossenen Regelkreislauf wird erreicht, dass so lange nachgeregelt wird bis das gewünschte Lebenszeitergebnis erreicht werden kann.

Zur Steuerung (neben dem oben bereits erwähnten möglichen Abschalten des Bauteils) kommen insbesondere zwei alternativ oder ergänzend einsetzbare Varianten zum Tragen:
Die erste Variante besteht darin, dass die Windkraftanlage selbst so gesteuert wird, dass ein Rotor der Windkraftanlage im Verhältnis zu einer aktuellen Windrichtung und/oder mindestens ein Rotorblatt des Rotors in seiner Position so eingestellt wird, dass der Rotor eine geringere Rotationsgeschwindigkeit erreicht als die unter den Windverhältnissen maximal mögliche.

Die Windkraftanlage wird also beispielsweise durch Azimutsteuerung so gegen den Wind gestellt, dass die Energieausbeute der Windkraftanlage gezielt suboptimal, d.h. reduziert wird. Weniger kinetische Energie wirkt auf die Anlage, insbesondere auch auf ihre elektrischen bzw. elektronischen Bauteile, was zu einer Belastungsreduzierung führt. Bei Windkraftanlagen wird die Bezeichnung Azimut für alles benutzt, was mit der horizontalen Windnachführung der Gondel zu tun hat. Das Azimutsystem dient zur Nachführung der Gondel und besteht aus Azimutlager, Azimutantrieb, Azimutgetriebe und Azimutsteuerung. Der Azimutantrieb besteht aus mehrstufigen Planetengetrieben, die von frequenzgesteuerten elektrischen Motoren angetrieben werden. Statt oder zusätzlich zu einer entsprechend Azimutsteuerung kann auch eine ebenfalls zur Reduzierung der Energieausbeute geeignete Verstellung der Rotorblätter des Rotors erfolgen. Aktoren für die Azimut- bzw. Rotorblattsteuerung werden dazu veranlasst, die entsprechenden Positionsänderungen der dadurch betroffenen Elemente durchzuführen.

Bevorzugt wird der aktuelle Beanspruchungsindikatorwert auf Basis von Temperaturmessungen in einem Umgebungsbereich des elektrischen und/oder elektronischen Bauteils ermittelt. Dies erfolgt bevorzugt automatisch, das heißt mit Hilfe selbsttätiger Auswertungsalgorithmen bzw. -systeme im Rahmen eines Prozesses, für den im regulären Betrieb kein menschlicher Input zwingend nötig ist.

Während bei der Bestimmung von Beanspruchungsindikatorwerten in der Regel eine Benutzungszeit eines elektronischen Bauelements schlicht aufaddiert wird, wendet sich diese Ausführungsform von einer derartigen reinen zeitlichen Betrachtung ab und bringt eine andere Einflussgröße in den Fokus: Die Temperaturkurve, der ein Bauelement ausgesetzt ist, beeinflusst nämlich seine Alterung speziell im Rahmen von Windkraftanlagen besonders stark: Einzelkomponenten solcher elektrischen bzw. elektronischen Bauteile, beispielsweise Chipelemente, sind nämlich über permanente Verbindungen, beispielsweise Klebe- oder Lötverbindungen miteinander in Kontakt. So werden beispielsweise mehrere Halbleiterelemente, etwa sogenannte IGBT-Bausteine (Insulated Gate Polar Thyristors) eines IGBT-Umrichters, auf einem Trägersubstrat wie einer Platine aufgeklebt, gecrimpt bzw. gelötet. Diese permanente Verbindung zwischen Platine und Bausteinen wird durch die ständigen Temperaturwechsel in der Windkraftanlage starken Scherbelastungen ausgesetzt. Bei Erhitzung dehnen sich nämlich die Einzelkomponenten anders, in der Regel stärker, aus als das Trägersubstrat, so dass Spannungen in der Verbindung zwischen den beiden entstehen.

Die Ausführungsform macht es sich nun zunutze, dass sich solche Spannungen im Bauteil aufaddieren und so zu Materialermüdungen der Verbindungen zwischen den Einzelkomponenten des Bauteils führen, mit dem Effekt, dass meist das Brechen einer solchen Verbindung zum Ausfall des Bauteils führt. Der Erfinder hat also die wesentliche Ursache der entscheidenden Ermüdungsphänomene elektrischer und/oder elektronischer Bauteile in Windkraftanlagen zielgenau erkannt und hat daraus folgerichtig seine Methode abgeleitet, einen entsprechend akkuraten bzw. repräsentativen Beanspruchungsindikatorwert des elektrischen bzw. elektronischen Bauteils zu ermitteln.

Die Akkumulation von Beanspruchungswerten ist an sich aus der Materialkunde, nämlich aus der Untersuchung von Materialermüdungserscheinungen bekannt. So werden beispielsweise Beanspruchungen durch Spannungen bzw. Lasten an mechanischen Komponenten von Maschinen ermittelt und akkumuliert. Allerdings besteht ein entscheidender Unterschied zwischen der Vorgehensweise bei der Untersuchung von Ermittlungen in Einzelmaterialien zur Aufgabenstellung wie sie hier vorliegt darin, das elektrische bzw. elektronische Bauteile aus zahlreichen Einzel-Bestandteilen zusammengestellt sind und es daher nicht selbstverständlich ist, dass der für die Ermüdung entscheidende Faktor gerade die Temperatur(kurve) ist, der das Bauteil ausgesetzt ist. Es hat sich daher überraschend gezeigt, dass die hier vorgestellte Methode deutlich besser dazu geeignet ist, die Beanspruchung eines elektronischen Bauelements in einer Windkraftanlage abzubilden als etwa die reine Berechnung auf Basis von Betriebszeiten. Diese wäre nämlich an sich anzunehmen, kann man doch davon ausgehen, dass nicht die Verbindungen das schwächste Glied im Bauteil sind sondern die einzelnen Funktionskomponenten, d. h. also die elektronischen Bausteine. Kann davon wahrscheinlich im Rahmen üblicher Elektronik-Anwendungen auch ausgegangen werden, so hat sich in Bezug auf Windkraftanlagen-Anwendungen aber herausgestellt, dass die extremen Temperaturschwankungen die Bauteile so deutlich schwächen, dass andere Alterungsfaktoren eine untergeordnete Rolle spielen.

Dieser Effekt ist im Windkraftanlagen-Bereich nicht nur bei den erwähnten IGBT-Modulen, sondern beispielsweise auch bei mehrlagigen Kondensatorenblöcken, bei Transformatoren oder bei Generatoren zu erkennen. Auch die Alterung von galvanischen Systemen wie Batterien kann auf Basis dieses Effekts abgebildet werden.

Diese Methode ist auch ohne größeren Zusatzaufwand zu bewerkstelligen, da Temperaturmessungen im Windkraftanlagen, insbesondere im Bereich der Leistungselektronik von Windkraftanlagen, ohnehin vorgenommen werden, so dass davon auszugehen ist, dass ausreichend viele Temperatursensoren an geeigneten Messorten bereitstehen, um die benötigten Messwerte liefern zu können. Es bedarf also lediglich einer entsprechend angepassten Auswerteelektronik, die aus den Temperaturmesswerten den Beanspruchungsindikatorwert ableitet und gegebenenfalls entsprechende Signale weitergibt.

Prinzipiell ist es möglich, den Beanspruchungsindikatorwert auch dann zu ermitteln, wenn das Bauteil bereits im Einsatz in der Windkraftanlage war. So kann beispielsweise nach einem bestimmten Einsatzzeitraum ein Zwischen-BeanspruchungsIndikatorwert festgelegt oder mit geeigneten Methoden (beispielsweise und vorzugsweise der erfindungsgemäßen) im Nachhinein ermittelt werden und dann mithilfe des erfindungsgemäßen Verfahrens weiter fortgeschrieben werden. Es ist jedoch bevorzugt, dass die Temperaturmessungen über den gesamten Einsatzzyklus des Bauteils in der Windkraftanlage durchgeführt werden. Dadurch wird gewährleistet, dass der Beanspruchungsindikatorwert durchgängig mithilfe des erfindungsgemäßen Verfahrens ermittelt wird, was insbesondere die Stringenz der Ermittlungsmethode und damit die Aussagekraft der Ergebnisse erhöht.

Dabei werden besonders bevorzugt aus den Temperaturmessungen Referenzwerte abgeleitet und akkumuliert und es wird der Beanspruchungsindikatorwert auf Basis der akkumulierten Referenzwerte gebildet. Ein solcher Indikatorwert repräsentiert die akkumulierten Referenzwerte, bevorzugt umfasste er sie. Bei den Referenzwerten kann es sich sowohl um aus den Temperaturmessungen abgeleitete Betragswerte handeln als auch um Zahlenangaben, beispielsweise wie viele Temperaturzyklen das Bauteil bereits durchlaufen hat. Die Referenzwerte repräsentieren damit Messgrößen, die den Verschleiß beziehungsweise die Materialermüdung des Bauteils beziehungsweise einzelner seiner Komponenten zahlenmäßig widerspiegeln. Dabei kann die Akkumulation z. B. eine einfache Addition der Referenzwerte umfassend, sie kann jedoch auch nicht-linear erfolgen. Die entsprechende Akkumulationsmethode kann insbesondere abhängig von der Art und dem Einsatzort des jeweiligen elektrischen bzw. elektronischen Bauteils in der Windkraftanlage gewählt werden.

Die Temperaturmessungen können sowohl kontinuierlich als auch in regelmäßigen Abständen durchgeführt werden. Je dichter diese Abstände sind bzw. je näher die Temperaturmessungen an ein rein kontinuierliches Verfahren angenähert werden, desto feiner kann auch die Auswertung der Messergebnisse ausfallen und dann in die Ermittlung des Beanspruchungsindikatorwerts eingehen. Auf der anderen Seite genügt es auch, ausreichend häufige Temperaturmessungen getaktet durchzuführen, da davon ausgegangen werden kann, dass dennoch größere Temperaturzyklen mit Hilfe einer solchen Methode, beispielsweise auf Basis von viertelstündlichen Messungen bzw. Übermittlungen von Messergebnissen, verhältnismäßig genau abbildbar sind. Der Vorteil einer solchen Taktung besteht insbesondere darin, dass eine geringere Messdatenmenge zu verarbeiten ist und so Übertragungs- und Verarbeitungsraten auf ein notwendiges Mindestmaß reduziert werden können.

Bevorzugt basieren die Referenzwerte auf Temperaturzyklen einer aus den Temperaturmessungen ermittelten Temperaturverlaufskurve. Die Auswertung dieser Temperaturverlaufskurve, das heißt insbesondere die Bestimmung und die Gewichtung der Temperaturzyklen, erfolgt dabei besonders bevorzugt mithilfe von Auswertungsalgorithmen wie sie aus dem Bereich der Materialwissenschaft, das heißt im Rahmen der Untersuchung von Materialermüdungserscheinungen, verwendet werden. Eine Möglichkeit besteht dabei darin, auf Basis der Wöhler-Kurve eine Auswertung und Gewichtung vorzunehmen, eine andere Methode basiert auf den Regeln von Palmgren und Miner, die von einer linearen Abnutzung im Bereich der Materialermüdung ausgehen.

Alternativ oder ergänzend basieren die Referenzwerte vorzugsweise auf Maxima und/oder Minima einer aus den Temperaturmessungen ermittelten Temperaturverlaufskurve. Solche Extremwerte geben indirekt Aufschluss darüber, welchen höchsten temperaturbezogenen Beanspruchungen das Bauteil ausgesetzt wurde, so dass durch Berücksichtigung der Maxima beziehungsweise Minima ein besonders akkurater Rückschluss auf den Verschleiß des Bauteils möglich wird.

Weiterhin ist es vorteilhaft, wenn die Referenzwerte auf Basis von Über- und/oder Unterschreitungen von vorab festgelegten Temperatur-Schwellenwerten festgelegt werden. Die Überbeziehungsweise Unterschreitungen können dabei einfach gezählt werden und als Zählwerte in die Akkumulation eingehen. Alternativ können die Temperaturbeträge oberhalb beziehungsweise unterhalb der gewählten Temperaturschwellenwerte zur Akkumulation herangezogen werden.

Die Schwellenwerte dienen dabei zum Beispiel erstens zur Abgrenzung von effektiv insignifikanten Temperaturschwankungen von solchen, die den Verschleiß des Bauteils maßgeblich mitbewirken. Zweitens kann mit ihrer Hilfe eine einfache Ermittlung der Referenzwerte erfolgen im Vergleich zu solchen Verfahren, bei denen grundsätzlich alle Temperaturverläufe bei einer Akkumulation herangezogen werden. Insbesondere wird dadurch Rechnerkapazität gespart.

Es ist weiterhin auch möglich, mehrere Schwellenwerte zu setzen, nämlich mindestens einen Schwellenwert, der eine Überschreitung einer kritischen Temperaturschwelle bedeutet, und mindestens einen Schwellenwert, der eine Unterschreitung einer kritischen Temperaturschwelle bedeutet, sowie gegebenenfalls weitere Schwellenwerte, die zur Bewertung der Signifikanz der jeweiligen Über- bzw. Unterschreitungen herangezogen werden können.

So kann beispielsweise ein erster Überschreitungsschwellenwert gesetzt sein, der einen einfachen Zählimpuls auslöst und ein zweiter Überschreitungsschwellenwert, der einen zusätzlichen einfachen Zählimpuls auslöst sowie ein dritter Überschreitungsschwellenwert, dessen Überschreitung beispielsweise sogar noch stärker gewichtet werden kann als ein einfacher Zählimpuls. Analog hierzu können auch Unterschreitungsschwellenwerte stufenweise gesetzt werden.

Als einfaches Verfahren im Rahmen einer solchen schwellenwertbasierten Ermittlung können die Beträge der Über- bzw. Unterschreitungen im Rahmen der Akkumulation einfach addiert werden. Der Beanspruchungsindikatorwert besteht in diesem Fall schlicht aus den addierten Beträgen der Über- bzw. Unterschreitungen der Schwellenwerte.

Um zu erkennen, welchen Beanspruchungsindikatorwert ein bestimmtes elektrisches bzw. elektronisches Bauteil im Verlaufe seines Einsatzes erreicht hat, werden bevorzugt grafische Darstellungsverfahren verwandt, mit deren Hilfe einem Benutzer, zum Beispiel einem Bediener eines Kontrollrechners in einem Kontrollzentrum, Beanspruchungsindikatorwerte ausgegeben werden. Der aktuelle Beanspruchungsindikatorwert wird also grafisch, bevorzugt mit Hilfe einer Skala und/oder einer anderweitigen grafischen Kodierung, an einen Benutzer ausgegeben. Dadurch ist eine direkte Information für den Benutzer gegeben, aufgrund derer zeitgenau Bewertungen des Zustandes des Bauteils vorgenommen und in der Folge Austauschmaßnahmen eingeleitet werden können. Statt einer grafischen Darstellung kann auch eine Ausgabe über akustische Ausgabemittel, beispielsweise eine Sprachausgabe, erfolgen. Die Ausgabe muss nicht zwangsläufig am Einsatzort des elektrischen bzw. elektronischen Bauteils erfolgen, sondern kann auch über entsprechende Datenübertragungssysteme an eine Zentrale weitergeleitet werden. Sie kann auch im Eingangsbereich des Turms der Windkraftanlage, das heißt (bei Onshore-Anlagen) von einer ebenerdigen Position bzw. (bei Offshore-Anlagen) einem Standort auf Höhe des Wasserspiegels an einem Aufstellungsort ablesbar beziehungsweise hörbar erfolgen.

Grundsätzlich kann die Temperaturmessung, auf der das erfindungsgemäße Verfahren basiert, an zahlreichen geeigneten Stellen innerhalb und sogar außerhalb der Windkraftanlage erfolgen. Insbesondere damit die Messgenauigkeit noch erhöht wird, ist es jedoch bevorzugt, die Temperaturmessungen durch mindestens einen Temperatursensor durchzuführen, der an einer relativ zum Bauteil festen Stelle im Umgebungsbereich des Bauteils angebracht ist. Ein solcher Umgebungsbereich definiert sich durch einen Abstand vom Bauteil, in dem zu erwarten ist, dass die dort ermittelte Temperatur in ° Celsius unter regulären Betriebsumständen der Windkraftanlage um maximal 10% bevorzugt um maximal 5%, besonders bevorzugt um maximal 2% abweicht von der Temperatur des Bauteils zur selben Messzeit.

Eine solche Anordnung des Temperatursensors bedingt, dass besonders verlässliche Messwerte abgeleitet werden können, die die Temperaturkurve des Bauteils mit großer Feinheit wiedergeben. Dies bedeutet trotzdem in der Regel keinen Zusatzaufwand, da in Windkraftanlagen ohnehin Temperatursensoren fest installiert sind, so dass diese einfach nur erfindungsgemäß genutzt und ggf. geeignet positioniert zu werden brauchen. Eine weitere Erhöhung der Messgenauigkeit und der Repräsentativität der ermittelten Temperaturmesswerte kann dadurch erzielt werden, dass ein einzelner Temperatursensor verwendet wird, der relativ zum Bauteil, bevorzugt verbunden mit dem Bauteil, an einem Zentralort angebracht ist. Ein solcher Zentralort kann beispielsweise auf der Mittelachse des Bauteils beziehungsweise einem Symmetriepunkt des Bauteils liegen; besonders bevorzugt ist der Temperatursensor direkt auf dem Bauteil, beispielsweise auf einer Trägerplatine des Bauteils, angeordnet und vorteilhafter Weise auch dort fixiert. Dies garantiert, dass die Temperaturmessung dort erfolgt, wo die Temperaturschwankungen praktisch direkt zu einem Verschleiß des Bauteils führen; die Fixierung an einer Trägerplatine beziehungsweise am Bauteil selbst garantiert zudem, dass der Temperatursensor nicht versehentlich beispielsweise bei Vibrationen vom Bauteil weg und später wieder in Richtung Bauteil hin befördert wird, wodurch sich Verfälschungen der Temperaturkurve ergäben.

Alternativ zur Anordnung eines Einzel-Temperatursensors können auch mehrere Temperatursensoren verwendet werden, die an repräsentativen Messorten im Umgebungsbereich des Bauteils angeordnet sind, bevorzugt an Messorten, an denen gemäß vorab erhobenen Erfahrungswerten besonders hohe lokale Temperaturschwankungen auftreten. Solche Erfahrungswerte können beispielsweise aus entsprechenden Wissenssystemen (Datenbanken) oder auf Basis von eigenen Messungen der Temperaturschwankungen abgeleitet werden. Die Anbringung der Temperatursensoren erfolgt damit im Effekt an besonders kritischen Orten im Bereich des Bauteils. Bei geeigneter Anbringung ist dadurch die Aussagekraft der Temperaturmesswerte wiederum besonders hoch.

Da erkannt wurde, dass gerade der thermisch erzeugte Stress besonders für die Alterung der elektrischen bzw. elektronischen Bauteile verantwortlich ist, wird es im Rahmen der Erfindung auch bevorzugt, eine Kühlung der Bauteile durchzuführen, insbesondere an den Verbindungen einzelner Bauteilkomponenten. Eine solche Kühlung kann sowohl aktiv, etwa mithilfe von Ventilatoren, als auch passiv, etwa durch Kühlelemente, durchgeführt werden. Insbesondere kann sie in Abhängigkeit von den in der Temperaturmessung ermittelten Messwerten geregelt werden, so dass beispielsweise besondere Temperaturspitzen abgefedert werden, um massivere Schäden an den Bauteilen gezielt zu verhindern.

Alternativ oder ergänzend zur Ermittlung des Beanspruchsindikatorwerts auf Basis von Temperaturmessungen kann vorgesehen sein, dass der aktuelle Beanspruchungsindikatorwert auf Basis von Ermittlungsergebnissen aus mindestens einem der folgenden Ermittlungsverfahren ermittelt wird:
- Messung eines Salzgehalts in der Luft - im Speziellen beobachtet über die Zeit (beispielsweise durch Akkumulation von Salzwerten) im Bereich der Windkraftanlage: Durch Beobachtung des langfristigen zeitlichen Verlauf des Salzgehalts in der Luft im Bereich der jeweiligen Windkraftanlage können Verschleißwerte, beispielsweise von Isolierungen bzw. Dichtungen abgeleitet werden und auf Basis dessen (ggf. in Kombination mit der Berücksichtung anderer Faktoren) der Beanspruchungsindikatorwert gebildet werden.
- Ermittlung von Windprofilen an und/oder in Windrichtung vor der Windkraftanlage: Windprofile im Bereich der Windkraftanlage (z.B. in einem Abstand von 100m vor der Windkraftanlage) können beispielsweise mittels der bekannten LIDAR-Systeme ermittelt werden. Mit ihrer Hilfe kann eine aktuell abgeleitete Belastung über der Zeit bzw. eine kurzfristige Windprognose erstellt werden, woraus sich der jeweils zu erwartende Belastungseinfluss auf das Bauteil ableiten, d.h. prognostizieren lässt.
- Temperaturmessung von elektrischen Einrichtungen der weiteren Windkraftanlage: Aus den hierdurch generierten Messwerten kann über Korrelationsfunktionen eine detaillierte und zuverlässige Prognose der Lebenszeit des betreffenden zu entlastenden Bauteils ermittelt werden.
- Fehlerstrommessungen am elektrischen und/oder elektronischen Bauteil: Hierdurch können beispielsweise Ableitungsströme, etwa verursacht durch Isolationsprobleme oder Überspannungen am Bauteil selbst detektiert und dem ggf. gegengesteuert werden.
- Vibrationsmessungen an einem Triebstrang und/oder einem Generator der Windkraftanlage: Hieraus können sich Indikatoren für Lagerungsprobleme, etwa bei Generatoren ergeben, die ebenfalls einen erheblichen Alterungseinfluss auf elektrische bzw. elektronische Bauteile haben.

Die Bewertung einzelner oder all dieser Mess- bzw. Ermittlungsergebnisse (inklusive der oben ausführlich erörterten Temperaturmessergebnisse) kann in einem Gesamtalgorithmus über eine Korrelationsfunktion der einzelnen (ggf. über die Zeit ermittelten, beispielsweise akkumulierten) Werte zusammengefasst werden. Hieraus kann der Beanspruchsindikatorwert abgeleitet werden. Auch Grenzwerte der einzelnen Parameter können dabei verwendet werden, etwa analog zu dem, was zur Temperaturmessung ausgeführt worden ist. Der Algorithmus kann selbstlernend ausgeführt sein und daher bei Inbetriebnahme der Windkraftanlage eingestellt und über eine Vergleichsfunktion Änderungen des Bauteils im laufenden Betrieb ermitteln.

Durch eine (bevorzugt realisierte) Darstellung des Beanspruchungsindikatorwerts in Bezug auf den Wartungsindikatorwert kann ein Benutzer zusätzlich schnell und intuitiv feststellen, wie viel Zeit beziehungsweise wie viele Einsatz- beispielsweise Temperaturzyklen das Bauteil mit hoher Wahrscheinlichkeit noch sicher funktionieren wird und wann er eine Wartung vornehmen muss. Mit anderen Worten ist damit ein relativ akkurater Rückschluss auf die relative Lebensdauer des Bauteils unkompliziert und intuitiv möglich.

Dies kann zusätzlich noch dadurch erleichtert werden, dass der Bezug zwischen dem aktuellen Beanspruchungsindikatorwert und dem Wartungsindikatorwert grafisch, bevorzugt mit Hilfe einer Skala und/oder einer grafischen Kodierung, an einen Benutzer ausgegeben wird. Die Vorteile der grafischen Ausgabe sind bereits erwähnt worden, sie werden noch potenziert durch die Bezugstellung der beiden Indikatorwerte zueinander.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine schematische Blockdarstellung des Ablaufs einer Ausführungsform eines erfindungsgemäßen Verfahrens,
Figur 2 eine Seitenansicht einer Windkraftanlage mit einer Ausführungsform eines erfindungsgemäßen Systems,
Figur 3 eine schematische Detailansicht einer Bauteilanordnung mit demselben Bauteil und demselben Ermittlungssystem wie in Figur 2 mitsamt einem nochmals verfeinerten Detail eines einzelnen Bausteins des elektronischen Bauteils,
Figur 4 drei Kurvendarstellungen von Temperatur-, Beanspruchungs- und Lebenszeitverläufen des elektronischen Bauteils aus Figur 3,
Figur 5 eine schematische Blockdarstellung einer Systemarchitektur, wie sie in der Bauteilanordnung aus Figur 3 realisiert ist,
Figur 6 eine schematische Blockdarstellung eines Signalprozesses im Rahmen einer Ausführungsform des erfindungsgemäßen Verfahrens.

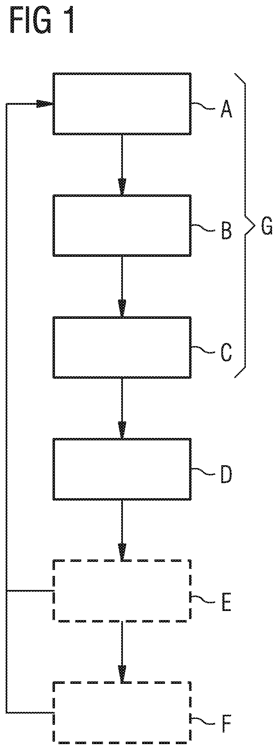

Figur 1 zeigt in Blockdarstellung die Schritte eines erfindungsgemäßen Verfahrens gemäß einer Ausführungsform. Hierzu wird in einem (hier dreigeteilten) Ermittlungsschritt G eine erwartete Lebenszeit eines elektrischen bzw. elektronischen Bauteils bis zum Erreichen eines Wartungsindikatorwerts ermittelt. Bei Erreichen des Wartungsindikatorwerts, der vorab vorgegeben ist, wird davon ausgegangen, dass das Bauteil gewartet werden sollte.

Der Ermittlungsschritt G umfasst drei Teilschritte A, B, C, nämlich:
- einen ersten Schritt A, bei dem ein aktueller Beanspruchungsindikatorwert des elektrischen und/oder elektronischen Bauteils ermittelt wird,
- einen zweiten Schritt B, bei dem der aktuelle Beanspruchungsindikatorwerts mit dem Wartungsindikatorwert in Bezug gesetzt wird, und
- einen dritten Schritt C, bei dem die erwartete Lebenszeit auf Basis des Bezugs zwischen dem Beanspruchungsindikatorwert und dem Wartungsindikatorwert abgeleitet wird.

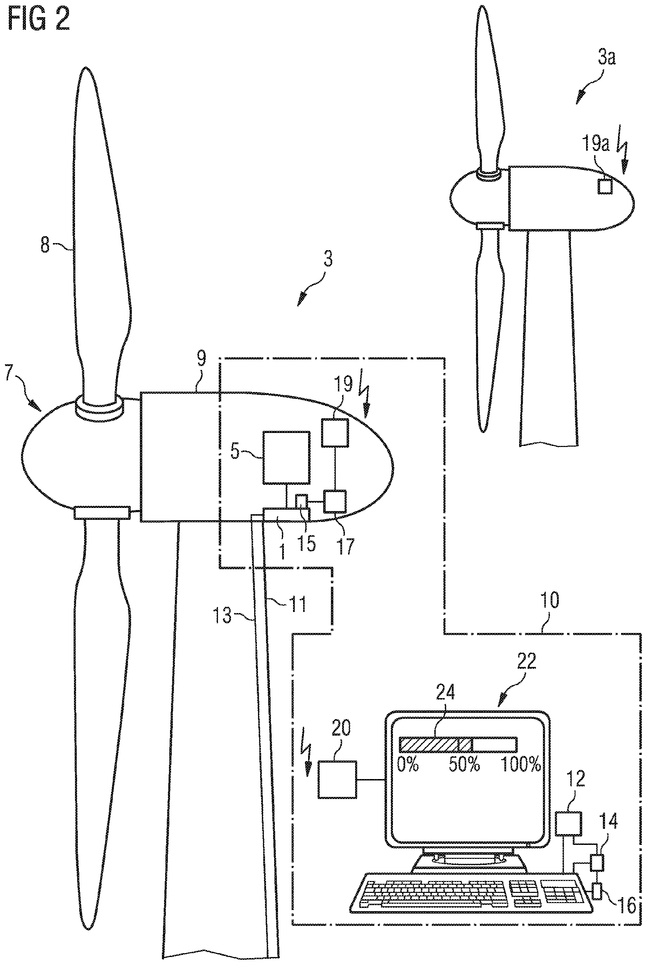

In einem Schritt D erfolgt ein Abgleich der erwarteten Lebenszeit mit einem nächsten Wartungszeitpunkt der Windkraftanlage, auf Basis dessen gemäß zweier alternativer Schritte E, F gezielt derart gegengesteuert wird, , dass die Belastung des betreffenden Bauteils reduziert wird. Dies erfolgt im Schritt E durch Steuerung der Windkraftanlage und/oder in Schritt F durch Steuerung mindestens einer weiteren Windkraftanlage im räumlichen Umfeld der betreffenden Windkraftanlage, wie im Folgenden anhand von Figur 2 noch näher ausgeführt wird.

Figur 2 zeigt eine Windkraftanlage 3 mit einem Turm 11, auf dem eine Kabine 9 drehbar angebracht ist. An der Front der Windkraftanlage 3 auf der linken Seite ist ein Rotor 7 mit Rotorblättern 8 drehbar fixiert, dessen durch Wind induzierte Rotation in einem Generator 5 in der Kabine 9 in elektrische Energie umgewandelt wird. Der Übersichtlichkeit halber sind die Antriebswelle und zahlreiche weitere Komponenten der Kraftübertragung der Rotationskraft in den Generator 5 nicht mit dargestellt.

Zur Umwandlung der elektrischen Energie aus dem Generator 5 für eine Übertragung ins Stromnetz in geeigneter Form (insbesondere mit einer gewünschten Spannung und Frequenz) dient ein Umwandler oder Umrichter 1, also ein elektronisches Bauteil 1, das über eine Stromleitung 13 mit dem Stromnetz (nicht dargestellt) verbunden ist. Auf dem Umrichter 1 ist ein Temperatursensor 15 angebracht, der mit einem Ermittlungssystem 17 verbunden ist. Vom Ermittlungssystem 17 werden Signale an einen Signalüberträger 19 weitergegeben, der diese Signale über eine kabellose Verbindung weiter an ein Empfangsgerät 20 in einem Kontrollzentrum (nicht dargestellt) übermittelt. Dort werden mit den Signalen übertragene Informationen an einem Bildschirm 22 eines Rechners grafisch in Form einer Skala 24 dargestellt.

Dargestellt ist weiterhin ein erfindungsgemäßes System 10 zur Belastungsanpassung des Umrichters 1: Dieses umfasst neben dem Temperatursensor 15 dem Ermittlungssystem 17, dem Signalüberträger 19, dem Empfangsgerät 20 und dem Bildschirm 22 drei auf einem Prozessor eines Rechners realisierte Softwarekomponenten, nämlich eine Ermittlungseinheit 12, eine Abgleicheinheit 14 und eine Steuerungseinheit 16.

Weiterhin ist im Hintergrund eine weitere Windkraftanlage 3a, ebenfalls ausgestattet mit einem Signalüberträger 19a, zu erkennen, die gemeinsam mit der Windkraftanlage 3 Teil eines Windparks ist.

Die Ermittlungseinheit 12 ermittelt eine erwartete Lebenszeit des Umrichters 1 wie in Schritt G (vgl. Fig. 1) beschrieben. Die Abgleicheinheit 14 empfängt von der Ermittlungseinheit Informationen über die erwartete Lebenszeit und gleicht diese mit einem nächsten Wartungszeitpunkt der Windkraftanlage ab. Diese Abgleichinformationen empfängt die Steuerungseinheit 16, die hieraus Steuerbefehle ableitet. Diese Steuerbefehle werden an die beiden Windkraftanlagen 3, 3a weitergegeben und bewirken einerseits in der Windkraftanlage 3, dass diese aus dem Wind gedreht wird, d.h. dass ihre Rotorblätter 8 und die die Kanzel 9 so verstellt werden, dass die Windkraftanlage 3 nur eine geringere kinetische Energie aus dem am Rotor 7 auftreffenden Wind von der Windkraftanlage 3 verarbeitet wird als potenziell möglich.

Unterstützt wird diese Reduzierung der kinetischen Energie auch dadurch, dass von vorneherein weniger Wind auf die Windkraftanlage 3 zugelassen wird. Dies erfolgt dadurch, dass die Steuerungseinheit 16 auch Steuerbefehle an die weitere Windkraftanlage 3 versendet, die dazu führen, dass die weitere Windkraftanlage 3a die Windkraftanlage 3 stärker in ihren Windschatten nimmt als üblicherweise nötig, d.h. im Volllastbetrieb vorgesehen. Auch die weitere Windkraftanlage 3a wird daher anders gegen den Wind ausgerichtet.

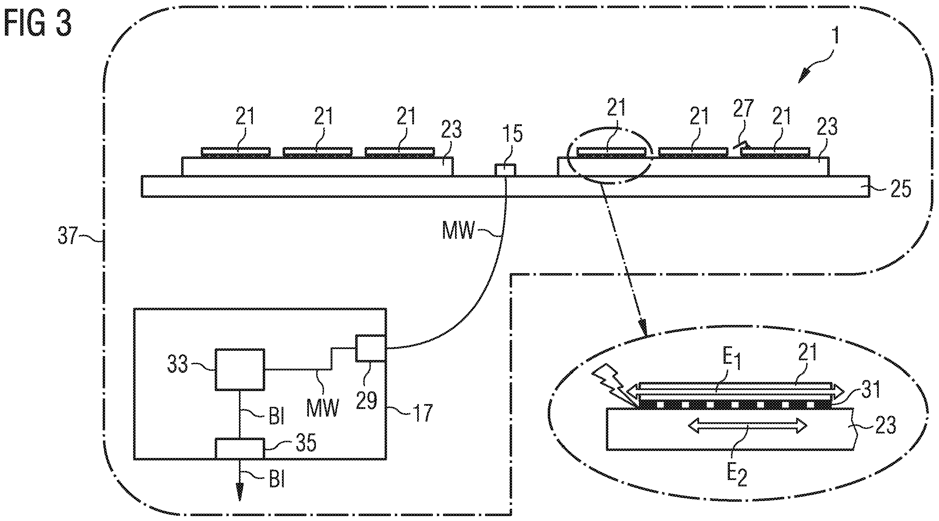

Figur 3 zeigt eine Bauteilanordnung 37. Diese Bauteilanordnung 37 umfasst das Bauteil 1, das heißt den Umrichter 1 und das Ermittlungssystem 17. Der Umrichter 1 umfasst eine Trägerplatine 25, auf der auf zwei Isolierschichten 23 jeweils Einzelbausteine 21 in Form von IGBT-Halbleiterelementen angeordnet sind. In der Detailzeichnung rechts unten ist ein einzelner solcher Einzelbaustein 21 auf einer Isolierschicht 23 dargestellt. Er ist mittels einer Verbindungsschicht 31, hier einem Klebstoff, mit der Isolierschicht 23 verbunden. Wird das Bauteil 1 einer starken Erwärmung ausgesetzt, so expandiert der Einzelbaustein 21 stärker als die Isolierschicht 23. Hierdurch entstehen Spannungen im Speziellen in der Verbindungsschicht 31, so dass gerade diese Verbindungsschicht 31 mit der Zeit ermüdet. Ebenso können auch Leiterelemente 27, die Signale bzw. elektrische Ladungen von den Einzelbausteinen 21 weg beziehungsweise zu den Einzelbausteinen 21 hin leiten, auf eine ähnliche Art und Weise thermisch beansprucht werden. Auf dem Bauteil 1 ist zur Ermittlung einer Temperaturkurve der Temperatursensor 15 zentral an einem Symmetriepunkt der Platine 25 angeordnet. Von diesem Temperatursensor 15 führt eine Verbindung zur Übertragung von Temperaturmesswerten MW zur Ermittlungseinheit 17. Die Ermittlungseinheit 17 weist eine Eingangschnittstelle 29 und eine Ausgangsschnittstelle 35 sowie ein Auswertungsmodul 33 auf, in das die Messwerte MW von der Eingangschnittstelle 29 eingespeist werden. Im Auswertungsmodul 33 wird gemäß einer vorgegebenen Regel, beispielsweise eines Algorithmus auf Basis der Wöhler'sehen Kurve ein Beanspruchungsindikatorwert BI abgeleitet. Über die Ausgangschnittstelle 35 wird dieser Beanspruchungsindikatorwert BI weitergeleitet an den Signalüberträger 19 (vergleiche Figur 2). Wie in Figur 2 dargestellt kann dieser Beanspruchungsindikatorwert BI an einen Benutzer grafisch ausgegeben werden.

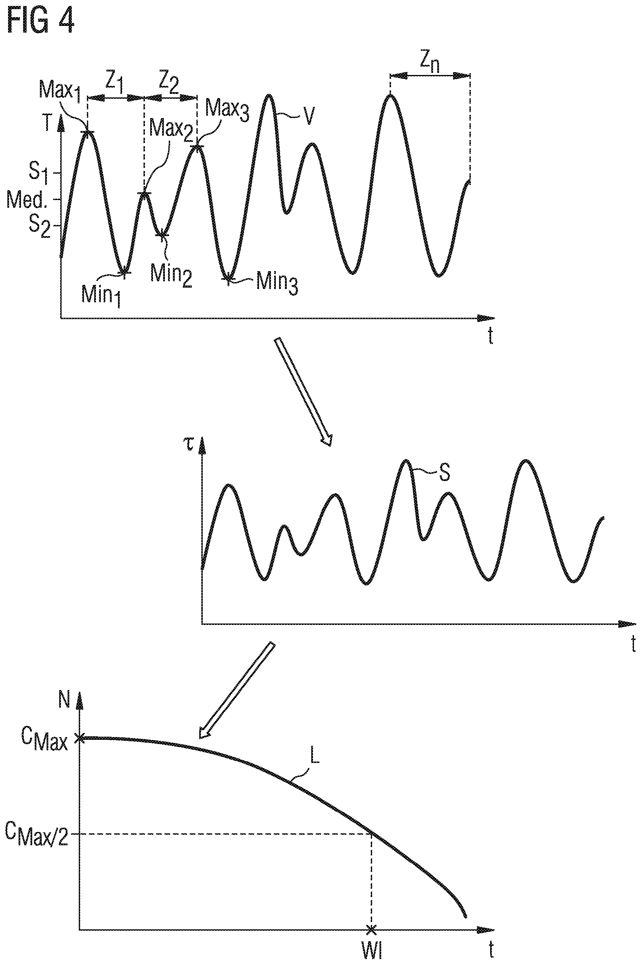

Die Logik hinter diesem auf Temperaturmessung am Bauteil 1 basierenden Ermittlungsverfahrens ergibt sich aus den Kurven, die in Figur 4 dargestellt sind. Die erste Kurve V ist eine Temperaturverlaufskurve V, die die am Temperatursensor 15 gemessene Temperatur über die Zeit aufgetragen darstellt. Um einen statistischen Mittelwert Med, der die Durschnittstemperatur in der Kabine 9 der Windkraftanlage 3 repräsentiert, oszilliert die Temperaturkurve in ungleichmäßigen Bewegungen. Dabei beschreibt sie Maxima Max₁, Max₂, Max₃ und Minima Min₁, Min₂, Min₃. Hieraus ergeben sich Zyklen Z₁, Z₂, ... Zₙ. Im Verlaufe dieser Zyklen Z₁, Z₂, ... Zₙ überschreitet die Kurve V teilweise einen Überschreitungsschwellenwert S₁ und unterschreitet teilweise einen Unterschreitungsschwellenwert S₂.

Die zweite Kurve S ist eine Scherbelastungsverlaufskurve S der Scherkraft zwischen zwei Lagen des Bauteils 1, die aufgrund der unterschiedlichen Ausdehnungskoeffizienten dieser zwei Lagen entsteht. Die Scherbelastung i ist hier ebenfalls über die Zeit aufgetragen. Es lässt sich erkennen, dass die Scherbelastungsverlaufskurve S analog zum Verlauf der Temperaturkurve V ausgebildet ist. Daraus ergibt sich letztendlich eine Ableitung von verbleibenden Lebenszyklen N über die Zeit, wie sie in der Lebenszyklus-Verlaufskurve L unten dargestellt sind. Als Lebenszyklen N werden dabei im vorliegenden Fall des Umrichters 1 Schaltzyklen N verstanden. Es wird also parallel ermittelt, wie oft das Bauteil 1 schaltet, um seine Rest-Lebenszeit quantifizieren zu können. Die Lebenszyklus-Verlaufskurve L zeigt die zu erwartende restliche Lebensdauer des Bauteils 1 aufgrund der Beanspruchung durch die Scherbelastungen bzw. die Belastung durch die Temperaturschwankungen, wie sie aus der Scherbelastungsverlaufskurve S und der Temperaturverlaufskurven V hervorgehen. Die Lebenszyklus-Verlaufskurve L wird mithilfe eines geeigneten Logarithmus zur Ermittlung von Materialermüdung abgeleitet. Bei ihrer Ermittlung können sowohl die gesamte TemperaturVerlaufskurve V als auch der Mittelwert Med oder ähnliche Durchschnittswerte verwendet werden, die aus der Kurve V hervorgehen. Ebenso können die Maxima Max₁, Max₂, Max₃ und die Minima Min₁, Min₂, Min₃ und die Zyklen Z₁, Z₂, ... Zₙ zur Bewertung herangezogen werden und/oder Über- bzw. Unterschreitungen der Schwellenwerte S1, S2. Mit anderen Worten kann die Kurve an sich interpretiert werden und auch zusätzlich oder alternativ Ableitungen oder Mittelwerte im Sinne einer Trendanalyse verwendet werden.

Die so gebildete Lebenszyklus-Verlaufskurve L beschreibt in dem vorliegenden Beispiel in etwa die Form einer umgedrehten Parabel. Zu Beginn des Einsatzes des Bauteils verfügt sie über die maximale Anzahl C_{Max} an Lebenszyklen N.

Ist die Hälfte C_{Max}/2 der maximalen Anzahl C_{Max} der Lebenszyklen N des Bauteil 1 erreicht, so ist im vorliegenden Fall der Wartungsindikatorwert WI erreicht, was bedeutet, dass das Bauteil 1 sicherheitshalber gewartet werden sollte. Dies bedeutet nicht, dass das Bauteil 1 automatisch Ausschuss ist, sondern es kann stattdessen auch festgestellt werden, dass das Bauteil 1 den Beanspruchungen besser standgehalten hat als erwartet oder dass es nur in Teilbereichen reparaturbedürftig ist.

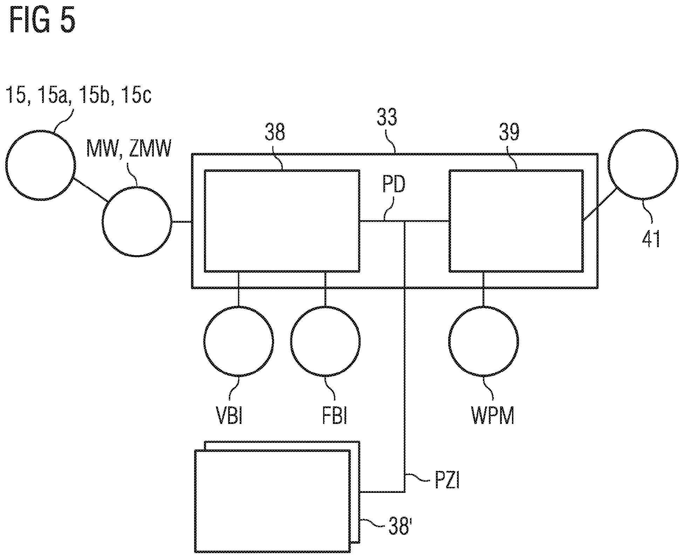

Figur 5 zeigt eine schematische Blockdarstellung einer Systemarchitektur, wie sie in der Bauteilanordnung 37 aus Figur 3 realisiert ist. Sensoren 15, 15a, 15b, 15c (hier als eine Einheit dargestellt) ermitteln verschiedene Messwerte MW, ZMW: Der Temperatursensor 15 ermittelt Temperaturmesswerte MW, während weitere Sensoren 15a, 15b, 15c Zusatzmesswerte ZMW ermitteln, zu Lastverteilungen in der Windkraftanlage 3 und zu mechanischen Spannungen. Diese Messwerte MW, ZMW fließen in eine Windkraftanlagen-Kontrolleinheit 38 innerhalb des Auswertungsmoduls 33 ein. Im Auswertungsmodul 33 ist außerdem eine Lebenszeit-Monitoring-Einheit 39 angeordnet.

Die Windkraftanlagen-Kontrolleinheit 38 bezieht weiterhin variable Prozessinformationen VBI aus dem Betrieb der Windkraftanlage 3, etwa die Drehzahl des Rotors 7 oder den Leistungs-Output der Windkraftanlage 3. Diese Werte können durch eigen Sensoren gemessen werden, sind aber auch ableitbar aus anderen Messwerten. Hinzu kommen feste Betriebsinformationen FBI, die sich auf fest vorgenommene Einstellungen der Windkraftanlage 3 beziehen, etwa auf Regelungsparameter des betreffenden elektronischen Bauteils 1, die vorab festgelegt sind und dann im Betrieb höchstens in Intervallen nachjustiert werden. Diese Informationen fließen zur Bewertung in die Windkraftanlagen-Kontrolleinheit 38 ein und werden dort miteinander abgeglichen, so dass daraus Prozessdaten PD resultieren. Zusätzlich können in einem Windpark mit mehreren Windkraftanlagen 3, 3a Prozesszusatzinformationen PZI aus den Windkraftanlagen-Kontrolleinheiten 38' der anderen Windkraftanlagen analog den Prozessdaten PD bezogen werden. Diese Prozesszusatzinformationen können beispielsweise dem Abgleich der Prozessdaten PD, etwa ihrer Verifizierung und Kontrolle dienen. Sie werden daher gemeinsam mit den Prozessdaten PD in die Lebenszeit-Monitoring-Einheit 39 eingespeist. Die Lebenszeit-Monitoring-Einheit 39 bezieht weiterhin Windpark-Modell-Informationen WPM. Dies sind beispielsweise Informationen zur Größe und geometrischen Anordnung des Windparks und zur Position der betreffenden Windkraftanlage 3 innerhalb des Windparks, aber auch Informationen zur Haupt-Windrichtung uvm. Zudem können Informationen aus externen Sensoren 41 bezogen werden, beispielsweise von Windmasten, externen Temperatursensoren und Blitzdetektoren. Unter Berücksichtigung bevorzugt all dieser Informationen leitet die Lebenszeit-Monitoring-Einheit 39 den Beanspruchungsindikatorwert BI des Bauteils 1 ab.

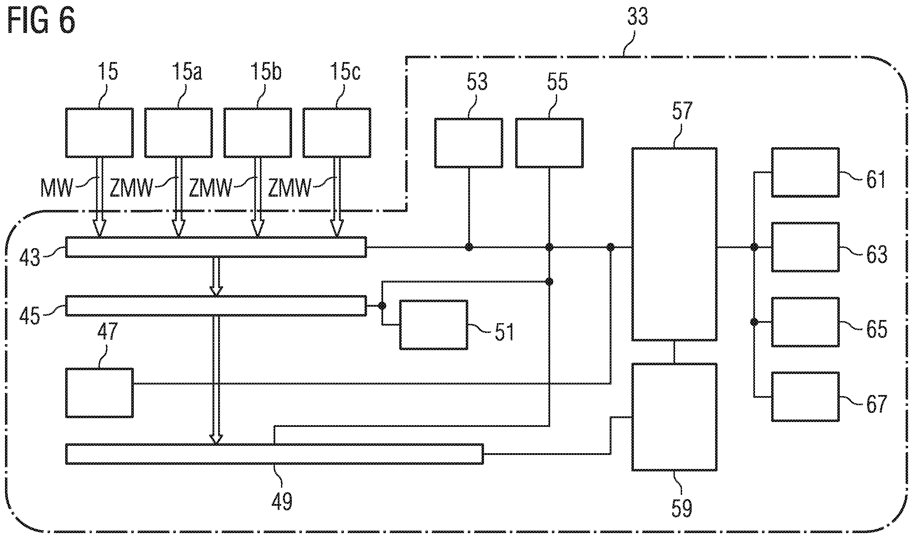

Figur 6 zeigt eine schematische Blockdarstellung eines Signalprozesses im Rahmen einer Ausführungsform des erfindungsgemäßen Verfahrens.

Die Sensoren 15, 15a, 15b, 15c aus Figur 5 speisen ihre Messwerte MW, ZMW in das Auswertungsmodul 33 ein. Dieses ist im vorliegenden Falle als eine Ansammlung von Softwarebausteinen auf einem Prozessor realisiert. Diese Software-Bausteine sind:
Ein erster Zeitpuffer 43 und ein zweiter Zeitpuffer 45, eine Vorhersage-Einheit 47 und eine Rückprojektionseinheit 51, ein 10-Minuten-Timer 53, eine Gefahrenerkennungseinheit 55, eine Gefahrenanzeichen-Sammlungseinheit 49 und eine Gefahrenanzeichen-Auswertungseinheit 59 sowie eine Klassifizierungseinheit 57 und vier Schadensmeldungseinheiten 61, 63, 65, 67.

Die Messwerte MW, ZMW aus den Sensoren 15, 15a, 15b, 15c werden im ersten Zeitpuffer 43 gesammelt und dann in einer vereinheitlichten Taktung weitergegeben. Dadurch können Unterschiede in der Taktung der einzelnen Sensoren 15, 15a, 15b, 15c ausgeglichen werden. Im zweiten Zeitpuffer werden die gesammelten Messwerte der vorherigen Taktung gesammelt und in der Rückprojektionseinheit 51 zur Projektion eines Messzustands zum Zeitpunkt der Ausgabe der vorherigen Taktung ausgewertet. Die Vorhersageeinheit 47 erstellt aufgrund der im ersten Zeitpuffer 43 und im zweiten Zeitpuffer 45 vorliegenden Messwerte MW, ZMW eine Vorhersage, welche Messwerte bei der nächsten Taktung in etwa zu erwarten sind.

Der 10-Minuten-Timer 53 sammelt alle Messwerte MW, ZMW über einen Zeitraum von 10 Minuten und gibt sie dann gesammelt weiter an den Signalüberträger 19 zur weiteren Übertragung an das Kontrollzentrum (vgl. Fig. 1). Die Gefahrenerkennungseinheit 55 erkennt akute Gefahren, beispielsweise eine Erhitzung des Bauteils 1 oder einen technischen Defekt, der beispielsweise zur Abschaltung des Betriebs der gesamten Windkraftanlage 3 führt, um Folgeschäden zu vermeiden. Hingegen dient die Gefahrenanzeichen-Sammlungseinheit 49 in Kombination mit der Gefahrenanzeichen-Auswertungseinheit 59 dazu, "weichere" Gefahrenanzeichen zu sammeln und ihre Häufigkeit und ggf. andere Symptome auszuwerten. So bedeutet das einmalige Überschreiten von bestimmten Temperaturwerten keine akute Gefahr, doch das häufige Auftreten solcher Werte kann Hinweise darauf geben, dass das Bauteil 1 oder andere Einheiten in der Windkraftanlage 3 einen Defekt hat bzw. haben. In der Klassifizierungseinheit 57 werden die Messwerte MW, ZMW sowie Informationen aus der Gefahrenerkennungseinheit 55 und der Gefahrenanzeichen-Auswertungseinheit 59 gesammelt und unter Verwendung des bereits oben beschriebenen Auswertungsalgorithmus die Rest-Lebensdauer des Bauteils 1 ermittelt. Die vier Schadensmeldungseinheiten 61, 63, 65, 67 dienen zur Meldung bestimmter Schadensarten, also beispielsweise einer Überhitzung, eines Betriebsfehlers, einer zu starken Erschütterung oder dem Erreichen einer kritischen Rest-Lebenszeit des Bauteils 1. All die generierten Informationen können über den 10-Minuten-Timer 53 an das Kontrollzentrum weitergegeben werden.

Es wird abschließend noch einmal darauf hingewiesen, dass es sich bei den vorhergehend detailliert beschriebenen Verfahren sowie bei den dargestellten Systemen lediglich um Ausführungsbeispiele handelt. Weitherhin schließt die Verwendung der unbestimmten Artikel "ein" bzw. "eine" nicht aus, dass die betreffenden Merkmale auch mehrfach vorhanden sein können. Außerdem können "Einheiten" aus einer oder mehreren, auch räumlich verteilt angeordneten, Komponenten bestehen.

## Patentansprüche

1. Verfahren zur Belastungsanpassung eines elektrischen und/oder elektronischen Bauteils (1), insbesondere eines Umrichters, in einer Windkraftanlage (3), umfassend folgende Schritte:
- Ermittlung (G) einer erwarteten Lebenszeit des elektrischen und/oder elektronischen Bauteils (1) bis zu einem Erreichen eines Wartungsindikatorwerts (WI), der einen Zustand des Bauteils (1) repräsentiert, an dem das Bauteil (1) aufgrund von vorab festgelegten Vorgaben gewartet werden soll,
- Abgleich (D) der erwarteten Lebenszeit mit einem nächsten Wartungszeitpunkt der Windkraftanlage (3),
- Steuerung (E, F) der Windkraftanlage (3) und mindestens einer weiteren Windkraftanlage (3a) im räumlichen Umfeld der Windkraftanlage (3) in Abhängigkeit von den Ergebnissen des Abgleichs der erwarteten Lebenszeit mit dem nächsten Wartungszeitpunkt der Windkraftanlage derart, dass die Belastung des elektrischen und/oder elektronischen Bauteils (1) reduziert wird, wobei die weitere Windkraftanlage (3a) gezielt so betrieben wird, dass die Windkraftanlage (3) stärker als notwendig in einen Windschatten der weiteren Windkraftanlage (3a) gelangt.

2. Verfahren gemäß Anspruch 1, wobei die Ermittlung der erwarteten Lebenszeit folgende Schritte umfasst:
a) Ermittlung (A) eines aktuellen Beanspruchungsindikatorwerts (BI) des elektrischen und/oder elektronischen Bauteils (1),
b) Inbezugsetzen (B) des aktuellen Beanspruchungsindikatorwerts (BI) mit dem Wartungsindikatorwert (WI),
c) Ableitung (C) der erwarteten Lebenszeit auf Basis des Bezugs zwischen dem Beanspruchungsindikatorwert (BI) und dem Wartungsindikatorwert (WI).

3. Verfahren gemäß Anspruch 1 oder 2, wobei die Ermittlung (G) der erwarteten Lebenszeit und die Steuerung (E, F) so lange in einem geschlossenen Regelkreislauf wiederholt werden, bis die Belastung des elektrischen und/oder elektronischen Bauteils (1) so reduziert ist, dass sich die erwartete Lebenszeit mindestens bis zum nächsten Wartungszeitpunkt verlängert.

4. Verfahren gemäß einem der vorhergehenden Ansprüche, wobei die Windkraftanlage (3) so gesteuert wird, dass ein Rotor (7) der Windkraftanlage (3) im Verhältnis zu einer aktuellen Windrichtung und/oder mindestens ein Rotorblatt (8) des Rotors (7) in seiner Position so eingestellt wird, dass der Rotor (7) eine geringere Rotationsgeschwindigkeit erreicht als die unter den Windverhältnissen maximal mögliche.

5. Verfahren gemäß einem der vorhergehenden Ansprüche, wobei der aktuelle Beanspruchungsindikatorwert (BI) auf Basis von Temperaturmessungen in einem Umgebungsbereich des elektrischen und/oder elektronischen Bauteils (1) ermittelt wird.

6. Verfahren gemäß Anspruch 5, wobei die Temperaturmessungen über den gesamten Einsatzzyklus des Bauteils (1) in der Windkraftanlage (3) durchgeführt werden und aus den Temperaturmessungen Referenzwerte abgeleitet und akkumuliert werden und der Beanspruchungsindikatorwert (BI) auf Basis der akkumulierten Referenzwerte gebildet wird.

7. Verfahren gemäß Anspruch 6, wobei die Referenzwerte auf Temperaturzyklen (Z₁, Z₂, Z₃,..., Zₙ) einer aus den Temperaturmessungen ermittelten Temperaturverlaufskurve (V) basieren.

8. Verfahren gemäß Anspruch 6 oder 7, wobei die Referenzwerte auf Maxima (Max₁, Max₂, Max₃) und/oder Minima (Min₁, Min₂, Min₃) einer aus den Temperaturmessungen ermittelten Temperaturverlaufskurve (V) basieren.

9. Verfahren gemäß einem der Ansprüche 5 bis 7, wobei die Referenzwerte auf Basis von Über- und/oder Unterschreitungen von vorab festgelegten Temperatur-Schwellenwerten (S₁, S₂) festgelegt werden.

10. Verfahren gemäß einem der Ansprüche 5 bis 9, wobei die Temperaturmessungen durch mindestens einen Temperatursensor (15) durchgeführt werden, der an einer relativ zum Bauteil (1) festen Stelle im Umgebungsbereich des Bauteils (1) angebracht ist.

11. Verfahren gemäß einem der vorhergehenden Ansprüche, wobei der aktuelle Beanspruchungsindikatorwert (BI) auf Basis von Ermittlungsergebnissen aus mindestens einem der folgenden Ermittlungsverfahren ermittelt wird:
- Messung eines Salzgehalts in der Luft im Bereich der Windkraftanlage (3)
- Ermittlung von Windprofilen an und/oder in Windrichtung vor der Windkraftanlage (3),
- Temperaturmessung von elektrischen Einrichtungen der weiteren Windkraftanlage (3a),
- Fehlerstrommessungen am elektrischen und/oder elektronischen Bauteil (1),
- Vibrationsmessungen an einem Triebstrang und/oder einem Generator (5) der Windkraftanlage.

12. Verfahren gemäß einem der vorhergehenden Ansprüche, wobei der Bezug zwischen dem aktuellen Beanspruchungsindikatorwert (BI) und dem Wartungsindikatorwert (WI) grafisch, bevorzugt mit Hilfe einer Skala (24) und/oder einer grafischen Kodierung, an einen Benutzer ausgegeben wird.

13. System (10) zur Belastungsanpassung eines elektrischen und/oder elektronischen Bauteils (1), insbesondere eines Umrichters, in einer Windkraftanlage (3), mindestens umfassend:
- eine Ermittlungseinheit (12), die im Betrieb eine erwartete Lebenszeit des elektrischen und/oder elektronischen Bauteils (1) bis zu einem Erreichen eines Wartungsindikatorwerts (WI) ermittelt, der einen Zustand des Bauteils (1) repräsentiert, an dem das Bauteil (1) aufgrund von vorab festgelegten Vorgaben gewartet werden soll,
- eine Abgleicheinheit (14), die so ausgebildet ist, dass sie die erwartete Lebenszeit mit einem nächsten Wartungszeitpunkt der Windkraftanlage (3) abgleicht,
- eine Steuerungseinheit (16) die die Windkraftanlage (3) und mindestens eine weitere Windkraftanlage (3a) im räumlichen Umfeld der Windkraftanlage (3) in Abhängigkeit von den Ergebnissen des Abgleichs der erwarteten Lebenszeit mit dem nächsten Wartungszeitpunkt der Windkraftanlage derart steuert, dass die Belastung des elektrischen und/oder elektronischen Bauteils (1) reduziert wird, wobei die weitere Windkraftanlage (3a) gezielt so betrieben wird, dass die Windkraftanlage (3) stärker als notwendig in einen Windschatten der weiteren Windkraftanlage (3a) gelangt.

14. Computerprogrammprodukt, das direkt in einen Prozessor eines programmierbaren Belastungsanpassungssystems (10) ladbar ist, mit Programmcode-Mitteln, die bewirken, dass das Belastungsanpassungssystem (10) des Anspruchs 13 alle Schritte eines Verfahrens gemäß einem der Ansprüche 1 bis 12 ausführt, wenn das Programmprodukt auf dem Belastungsanpassungssystem (10) ausgeführt wird.

## Claims

1. Method for adjusting the stress on an electrical and/or electronic subassembly (1), in particular a converter, in a wind turbine (3), incorporating the following steps:
- determine (G) for the electrical and/or electronic subassembly (1) an expected service life up to the point when a maintenance indicator value (WI) is reached, which represents a state of the subassembly (1) at which, on the basis of conditions defined in advance, the subassembly (1) should be maintained,
- compare (D) the expected service life against the time point for the next maintenance of the wind turbine (3),
- control (E, F) the wind turbine (3) and at least one other wind turbine (3a) in the area around the wind turbine (3) as a function of the results of the comparison of the expected service life against the time point for the next maintenance of the wind turbine in such a way that the stress on the electrical and/or electronic subassembly (1) is reduced,
wherein the other wind turbine (3a) is selectively operated in such a way that the wind turbine (3) comes more greatly than necessary into a lee of the other wind turbine (3a).

2. Method according to claim 1, in which the determination of the expected service life incorporates the following steps:
a) determine (A) a present stress indicator value (BI) for the electrical and/or electronic subassembly (1),
b) compare (B) the present stress indicator value (BI) against the maintenance indicator value (WI),
c) deduce (C) the expected service life on the basis of the relationship between the stress indicator value (BI) and the maintenance indicator value (WI).

3. Method according to claim 1 or 2, in which the determination (G) of the expected service life and the control actions (E, F) are repeated in a closed control loop until the stress on the electrical and/or electronic subassembly (1) is reduced so far that the expected service life is extended at least up until the time point of the next maintenance.

4. Method according to one of the preceding claims, wherein the wind turbine (3) is so controlled that the position of a rotor (7) of the wind turbine (3) relative to a present wind direction, and/or the position of at least one rotor blade (8) of the rotor (7), is adjusted in such a way that the rotor (7) reaches a speed of rotation which is less than the maximum possible under the wind conditions.

5. Method according to one of the preceding claims, wherein the present stress indicator value (BI) is determined on the basis of temperature measurements in the area around the electrical and/or electronic subassembly (1).

6. Method according to claim 5, wherein the temperature measurements are carried out over the entire usage cycle of the subassembly (1) in the wind turbine (3) and reference values are derived and accumulated from the temperature measurements and the stress indicator value (BI) is formed on the basis of the accumulated reference values.

7. Method according to claim 6, wherein the reference values are based on temperature cycles (Z₁, Z₂, Z₃,..., Zₙ) in a curve (V) of temperature against time, determined from the temperature measurements.

8. Method according to claim 6 or 7, wherein the reference values are based on maxima (Max₁, Max₂, Max₃) and/or minima (Min₁, Min₂, Min₃) of a curve (V) of temperature against time, determined from the temperature measurements.

9. Method according to one of claims 5 to 7, wherein the reference values are defined on the basis of over- and/or under-shoots of temperature threshold values (S₁, S₂) defined in advance.

10. Method according to one of claims 5 to 9, wherein the temperature measurements are made by at least one temperature sensor (15) which is attached at a position, which is fixed relative to the subsystem (1), in the neighbourhood of the subsystem (1).

11. Method according to one of the preceding claims, wherein the present stress indicator value (BI) is determined on the basis of determination results from at least one of the following methods of determination:
- measurement of a salt content in the air in the region of the wind turbine (3),
- determination of wind profiles at the wind turbine (3) and/or upwind of it,
- temperature measurement on electrical equipment on the other wind turbine (3a),
- current fault measurements on the electrical and/or electronic subassembly (1),
- vibration measurements on a drive train and/or a generator (5) in the wind turbine.

12. Method according to one of the preceding claims, wherein the relationship between the present stress indicator value (BI) and the maintenance indicator value (WI) is output to a user in graphical form, preferably with the assistance of a scale (24) and/or a graphic encoding.

13. System (10) for adjusting the stress on an electrical and/or electronic subassembly (1), in particular a converter, in a wind turbine (3), incorporating at least:
- a determination unit (12) which, in operation, determines for the electrical and/or electronic subassembly (1) an expected service life up to the point when a maintenance indicator value (WI) is reached, which represents a state of the subassembly (1) at which, on the basis of conditions defined in advance, the subassembly (1) should be maintained,
- a comparison unit (14), which is so designed that it compares the expected service life against the time point for the next maintenance of the wind turbine (3),
- a control unit (16) which controls the wind turbine (3) and at least one other wind turbine (3a) in the area around the wind turbine (3) as a function of the results of the comparison of the expected service life against the time point for the next maintenance of the wind turbine in such a way that the stress on the electrical and/or electronic subassembly (1) is reduced, wherein the other wind turbine (3a) is selectively operated in such a way that the wind turbine (3) comes more greatly than necessary into a lee of the other wind turbine (3a).

14. Computer program product which can be loaded directly into a processor of a programmable stress adjustment system (10), with program code means which cause the stress adjustment system (10) of claim 13 to carry out all the steps of a method in accordance with one of claims 1 to 12 when the program product is executed on the stress adjustment system (10).

## Revendications

1. Procédé d'adaptation des charges subies par un composant (1) électrique et/ou électronique, en particulier d'un convertisseur, dans une éolienne (3), comprenant les étapes suivantes :
- détermination (G) d'une durée de vie escomptée du composant (1) électrique et/ou électronique jusqu'à atteindre une valeur indicatrice de maintenance (WI) qui représente un état du composant (1), à laquelle le composant (1) doit subir une maintenance en raison de spécifications déterminées au préalable,
- comparaison (D) de la durée de vie escomptée avec une prochaine date de maintenance de l'éolienne (3),
- commande (E, F) de l'éolienne (3) et d'au moins une autre éolienne (3a) dans l'environnement physique de l'éolienne (3) en fonction des résultats de la comparaison de la durée de vie escomptée avec la prochaine date de maintenance de l'éolienne, de telle sorte que la charge du composant (1) électrique et/ou électronique soit réduite, dans lequel l'autre éolienne (3a) est exploitée de façon ciblée de sorte que l'éolienne (3) parvienne plus fortement que nécessaire dans un côté abrité du vent de l'autre éolienne (3a).

2. Procédé selon la revendication 1, dans lequel la détermination de la durée de vie escomptée comprend les étapes suivantes :
a) détermination (A) d'une valeur indicatrice de sollicitation (BI) actuelle du composant (1) électrique et/ou électronique,
b) mise en rapport (B) de la valeur indicatrice de sollicitation (BI) actuelle avec la valeur indicatrice de maintenance (WI),
c) déduction (C) de la durée de vie escomptée sur la base du rapport entre la valeur indicatrice de sollicitation (BI) et la valeur indicatrice de maintenance (WI).

3. Procédé selon la revendication 1 ou 2, dans lequel la détermination (G) de la durée de vie escomptée et la commande (E, F) sont répétées dans un circuit de régulation fermé jusqu'à ce que la charge du composant (1) électrique et/ou électronique soit réduite au point que la durée de vie escomptée se prolonge au moins jusqu'à la prochaine date de maintenance.

4. Procédé selon l'une des revendications précédentes, dans lequel l'éolienne (3) est ainsi commandée qu'un rotor (7) de l'éolienne (3) est ainsi réglé dans sa position par rapport à un sens du vent actuel et/ou au moins une pale de rotor (8) du rotor (7) que le rotor (7) atteint une vitesse de rotation moindre que celle maximale possible dans les conditions de vent.

5. Procédé selon l'une des revendications précédentes, dans lequel la valeur indicatrice de sollicitation (BI) actuelle est déterminée en se basant sur des mesures de température dans une partie environnante du composant (1) électrique et/ou électronique.

6. Procédé selon la revendication 5, dans lequel les mesures de température sont effectuées sur la totalité du cycle d'utilisation du composant (1) dans l'éolienne (3) et des valeurs de référence sont déduites des mesures de température et accumulées, et la valeur indicatrice de sollicitation (BI) est formée en se basant sur les valeurs de référence accumulées.

7. Procédé selon la revendication 6, dans lequel les valeurs de référence se basent sur des cycles de température (Z₁, Z₂, Z₃, ... Zₙ) d'une courbe de tracé de températures (V) déterminée à partir des mesures de température.

8. Procédé selon la revendication 6 ou 7, dans lequel les valeurs de référence se basent sur des maximas (Max₁, Max₂, Max₃) et/ou des minimas (Min₁, Min₂ Min₃) d'une courbe de tracé de températures (V) déterminée à partir des mesures de température.

9. Procédé selon l'une des revendications 5 à 7, dans lequel les valeurs de référence sont déterminées en se basant sur des écarts au-delà et/ou en-deçà de valeurs seuil de température (S₁, S₂) déterminées au préalable.

10. Procédé selon l'une des revendications 5 à 9, dans lequel les mesures de température sont effectuées par au moins un capteur de température (15) qui est appliqué sur un point fixe par rapport au composant (1) dans la partie environnante du composant (1).

11. Procédé selon l'une des revendications précédentes, dans lequel la valeur indicatrice de sollicitation (BI) actuelle est déterminée en se basant sur des résultats de détermination à partir d'au moins un des procédés de détermination suivants :
- mesure d'une teneur en sel dans l'air au niveau de l'éolienne (3),
- détermination de profils du vent contre et/ou dans le sens du vent devant l'éolienne (3),
- mesure de température de dispositifs électriques de l'autre éolienne (3a),
- mesures de courant de fuite sur le composant (1) électrique et/ou électronique,
- mesures de vibration sur un entraînement et/ou un générateur (5) de l'éolienne.

12. Procédé selon l'une des revendications précédentes, dans lequel le rapport entre la valeur indicatrice de sollicitation (BI) actuelle et la valeur indicatrice de maintenance (WI) est indiqué à un utilisateur de manière graphique, de préférence à l'aide d'une échelle (24) et/ou d'un codage graphique.

13. Système (10) d'adaptation des charges subies par un composant (1) électrique et/ou électronique, en particulier d'un convertisseur, dans une éolienne (3), comprenant au moins :
- une unité de détermination (12) qui pendant le fonctionnement détermine une durée de vie escomptée du composant (1) électrique et/ou électronique jusqu'à atteindre une valeur indicatrice de maintenance (WI) qui représente un état du composant (1), à laquelle le composant (1) doit subir une maintenance en raison de spécifications déterminées au préalable,
- une unité de comparaison (14) qui est ainsi conçue qu'elle compare la durée de vie escomptée avec une prochaine date de maintenance de l'éolienne (3),
- une unité de commande (16) qui commande l'éolienne (3) et au moins une autre éolienne (3a) dans l'environnement physique de l'éolienne (3) en fonction des résultats de la comparaison de la durée de vie escomptée avec la prochaine date de maintenance de l'éolienne, de telle sorte que la charge du composant (1) électrique et/ou électronique soit réduite, dans lequel l'autre éolienne (3a) est exploitée de façon ciblée de sorte que l'éolienne (3) parvienne plus fortement que nécessaire dans un côté abrité du vent de l'autre éolienne (3a) .

14. Produit de programme informatique qui peut être chargé directement dans un processeur d'un système d'adaptation des charges (10) programmable, avec des moyens de code de programme qui ont pour effet que le système d'adaptation des charges (10) de la revendication 13 exécute toutes les étapes d'un procédé selon l'une des revendications 1 à 12, lorsque le produit de programme informatique est exécuté sur le système d'adaptation des charges (10).
